# EUROPEAN PATENT SPECIFICATION

(11) **EP 2 102 260 B1**
(45) Date of publication and mention of the grant of the patent: **28.11.2018**
(21) Application number: 08707836.6
(22) Date of filing: 08.01.2008
(51) Int. Cl.: C08G 18/08, C08G 18/12, C08G 18/34, C08G 18/42, C08G 18/48, C08G 18/66, C08G 18/75, C09D 175/06, C09D 175/08

(54) **VOLATILE AMINES FREE POLYURETHANE AQUEOUS DISPERSIONS**
WÄSSRIGE POLYURETHANDISPERSIONEN OHNE FLÜCHTIGE AMINE
DISPERSIONS AQUEUSES DE POLYURÉTHANE EXEMPTES D'AMINES VOLATILES

(30) Priority: 12.01.2007 IT VA20070003
(43) Date of publication of application: 23.09.2009
(73) Proprietor: Lamberti Spa, 21041 Albizzate (VA) (IT)
(72) Inventor: COSTA, Gabriele, I-20026 Novate Milanese (mi) (IT); ALANZO, Vito, I-20022 Castano Primo (mi) (IT); LI BASSI, Giuseppe, I-21026 Gavirate (va) (IT)
(86) International application number: PCT/EP2008/050134
(87) International publication number: WO 2008/084041

(56) References cited:
- EP-A- 1 172 426
- WO-A-2005/005504
- FR-A- 2 381 796
- US-A- 4 701 480
- US-A1- 2004 210 025

## Description

### Technical Field

The present invention relates to a process for the preparation of aqueous dispersions of anionic polyurethanes free from volatile amines which are useful for the preparation of coatings for leather, paper, metals, textiles and plastics.

The anionic groups of the polyurethanes of the aqueous dispersions of the present invention are carboxylic groups.

### Background Art

Aqueous dispersions of anionic polyurethanes have been known for a long time and used in various fields, due to the high chemical and mechanical resistance of films which are obtained by evaporation of their liquid phase, and to their eco-compatibility.

The presence of acid groups in neutralized form generally assures dispersibility and stability in water of the polyurethane, characteristics that are often improved by the introduction in the polyurethane of non ionic groups, such as polyoxyethylene or polyoxypropylene side chains.

These side chains negatively affect the chemical and mechanical resistance of the film and, in particular, they increase swelling in water.

The neutralizing agents which are commonly used in the preparation of anionic polyurethane dispersions are volatile tertiary organic amines.

The presence of volatile amines in the dispersions generates bad smell and their evaporation during film formation creates toxicological and ecological problems.

Furthermore, the films obtained from aqueous dispersions containing volatile amines incorporate traces of amines and maintain a certain residual bad smell; in specially sensible applications, such as on paper, this drawback may even jeopardize the use of the dispersions.

The possibility of using alkaline cations as neutralizing agents of the acid groups of the water dispersed polyurethane is at times discussed in the literature in generic terms, underlining the related disadvantages.

By way of example, EP 1153051 reports that the polyurethane coagulates during application if inorganic alkali are used in the neutralization and the polyurethane does not contain polyoxyethylene chains.

In US 4,203,883 and US 4,387,181 it is reported that films containing unduly large amounts of alkaline metal salts generally have little water resistance.

In US 4,501,852 it is held that as the amount of non-volatile counter-ions increases, the hydrolytic stability of the film increases too, but swelling resistance is compromised in the presence of water.

The preparation of aqueous dispersions of anionic polyurethanes neutralized with alkaline metal base is actually discouraged in the literature.

In spite of the disadvantages that are apparently linked with the use of alkaline metal cations in the neutralization of carboxylic groups of water dispersed anionic polyurethanes, the description of two different procedures for the preparation of aqueous dispersions of anionic polyurethanes where the neutralizing agent is an alkaline metal cation was found in the literature.

In US 4,501,852, assigned to Mobay Chem. Co. three examples (Examples V, XXII and XXIV) describe the neutralization of three pre-polymers containing carboxylic groups in an anhydrous environment by addition of 60% sodium hydride in mineral oil, the subsequent dispersion in water and extension; the use of the alkaline hydride in mineral oil leads to manifest drawbacks in large scale operations and to the obtainment of dispersions containing an non-polar organic solvent which is not miscible with water.

In spite of the fact that in US 4,501,852 it is said that it is possible to neutralize also with alkaline metal hydroxides, carbonates, or bicarbonates, the neutralization of the pre-polymer containing carboxylic groups is always performed with volatile amines, with sodium hydride in anhydrous environment, or with mixture thereof.

Moreover, US 4,501,852 does not describe aqueous dispersions of polyurethanes that do not contain polyoxyethylene or polyoxypropylene side chains.

According to the procedure of US 4,701,480 (also assigned to Mobay Chem. Co.) the neutralization is not performed directly with an alkaline metal base on the carboxylic groups, but the carboxylic groups are first neutralized with a volatile organic base and alkaline metal salts of acids having pKa higher than 0 are subsequently added, in order to substitute, at least in part, the volatile organic base, that later can be distilled off.

The procedure of US 4,701,480, when it is used to obtain a dispersion free from volatile amine, involves many steps and a final distillation step that can alter the product (heating can render the dispersion instable) and also creates operative difficulties, such as deposits on the reactor walls, films and foams formation; moreover, the addition to a carboxylated dispersion of alkaline metal salts of acids having pKa higher than 0, when not in properly diluted form, causes instability of the dispersion itself, and the formation of coagula.

It is therefore necessary to dilute the base and, as a consequence, the final product.

The Applicant has now found a procedure for the preparation of stable aqueous dispersions of anionic polyurethanes devoid of polyoxyethylene and polyoxypropylene side chains which are completely free from volatile amines, procedure that does not involves the use of metal hydrides or volatile amines in any step.

Furthermore, the Applicant verified that the aqueous dispersions of anionic polyurethanes obtained from the procedure of the invention, when properly cross-linked, may be used to prepare polyurethane films having high chemical and mechanical resistance.

As far as the Applicant knows, stable aqueous dispersions free from volatile amines of anionic polyurethanes devoid of polyoxyethylene and polyoxypropylene side chains and containing carboxylic groups as the anionic groups are not described in the literature, and neither are obtainable with the methods known from the art.

### Disclosure of Invention

The fundamental object of the present invention is a procedure for the preparation of aqueous dispersions of anionic polyurethanes devoid of polyoxyethylene and polyoxypropylene side chains that comprises the following steps: a) preparing a pre-polymer containing from 2 to 10% by weight of-NCO groups and from 10 to 100 meq (milliequivalents) of carboxylic groups by reacting i) at least one polyol comprising a -COOH group, ii) at least one non ionic polyol, iii) at least one aliphatic or cycloaliphatic polyisocyanate; b) dispersing the pre-polymer in an aqueous solution containing an alkaline metal hydroxide, at temperature between 5° and 30°C, the amount of alkaline metal hydroxide being enough to neutralize at least 60% of the carboxylic groups of the pre-polymer; c) extending the pre-polymer by addition of a polyamine, maintaining the temperature between 5 and 40°C, and obtaining a 20 to 50% by weight aqueous dispersion of anionic polyurethane.

A further object of disclosed herein is represented by stable from 20 to 50% by weight aqueous dispersions of anionic polyurethane devoid of polyoxyethylene and polyoxypropylene side chains, which are free from volatile amines, and wherein the polyurethanes are obtained from the extension with polyamine of pre-polymers comprising from from 2 to 10% by weight of-NCO groups and from 10 to 100 meq of carboxylic groups in the form of salts of alkaline metal cations and obtained by reaction of i) at least one polyol containing a -COOH group, ii) at least one non ionic polyol, iii) at least one aliphatic or cycloaliphatic polyisocyanate.

The procedure according to the invention, when followed by the cross-linking of the polyurethane d), provides dispersions generating films with high chemical and mechanical resistance in water and in organic solvents.

It is therefore a further object of the present invention a method to prepare polyurethane films free from amines comprising the following steps: a) preparing a pre-polymer containing from 2 to 10% by weight of-NCO groups and from 10 to 100 meq of carboxylic groups by reaction of i) at least one polyol containing a -COOH group, ii) at least one non ionic polyol, iii) at least one aliphatic or cycloaliphatic polyisocyanate; b) dispersing the pre-polymer in an aqueous solution containing an alkaline metal hydroxide, at temperature between 5° and 30°C, the amount of alkaline metal hydroxide being enough to neutralize at least 60% of the carboxylic groups of the pre-polymer; c) extending the pre-polymer by addition of a polyamine, maintaining the temperature between 5 and 40°C, and obtaining a 20 to 50% by weight aqueous dispersion of anionic polyurethane; d) adding to the aqueous dispersion a cross-linking agent; e) spreading the aqueous dispersion on a solid support, such as leather, glass, paper, plastic, textile or metal, and drying.

### DETAILED DESCRIPTION

The polyols containing a carboxylic group utilizable in the procedure of the invention are polyols having carboxylic groups with relatively low reactivity, for example carboxylic acids having two substituents on the carbon atom in alpha to the carboxyl, such as the 2,2-dimethylolalkanoic acids. Preferably the polyol comprising a carboxylic group is 2,2-dihydroxymethylpropanoic acid.

The non ionic polyols useful for the preparation of the anionic polyurethanes of the invention are typically polyalkylene ether glycols or polyester polyols

The utilizable polyalkylene ether glycols are those having molecular weight from 400 to 4,000, more preferably from 1,000 to 2,000.

Examples of polyalkylene ether glycols are, without being limited to them, polypropylene ether glycol, polytetramethylene ether glycol and mixture thereof.

The polyol may also be a polyester having terminal hydroxyl groups and can be used in combination with, or instead of, the polyalkylene ether glycols.

Examples of such polyesters are those obtained from the reaction of acids, esters or acyl halides with glycols.

Suitable glycols are polyalkylene glycols, such polypropylene or tetramethylene glycol; substituted methylene glycol, such as 2,2-dimethyl-1,3-propane diol; cyclic glycols, such as cyclohexanediol, and aromatic glycols; these glycols are reacted with aliphatic, cycloaliphatic or aromatic dicarboxylic acids or with alkyl esters of low molecular weight alcohols or with compounds which are able to form ester linkages, to obtain polymers having relatively low molecular weight, and preferably having melting point below 70°C and molecular weight like the one cited above for polyalkylene ether glycols.

The acids which are useful for the preparation of said polyesters are, by way of example, phthalic acid, maleic acid, succinic acid, adipic acid, suberic acid, sebacic acid, terephthalic acid and hexahydrophthalic acid, and their alkyl and halogenated derivatives.

Hydroxyl terminated polycaprolactone can also be used.

Preferably, the polyisocyanates iii) are 1,6-hexamethylenediisocyanate, 4,4'-methylene-bis(4-cyclohexyl isocyanate), isophorone diisocyanate or mixture thereof.

More preferably, in the preparation of the pre-polymer 4,4'-methylene-bis(4-cyclohexyl isocyanate) is used.

The pre-polymer may optionally be prepared in the presence of a solvent, which is water miscible and non-reactive with the pre-polymer functional groups.

Among the utilizable solvents, we cite the aliphatic ketones, such as acetone and methyl ethyl ketone, aliphatic amides, such as N-methylpyrrolidone (NMP), N-ethylpyrrolidone (NEP), glycol ethers, such as dipropyleneglycol dimethyl ether (DMM), aliphatic esters, such as dipropyleneglycol diacetate, cyclic or linear aliphatic carbonate, among which we cite propylene carbonate.

The solvent is added in minimal amounts to regulate the viscosity of the pre-polymer and of the dispersion.

At the end of step a), it is also possible to add one (or more) aliphatic or cycloaliphatic polyisocianate iii); also in this case, the total -NCO free groups which are present for the extension of step c), and partly belong to the pre-polymer and partly to the polyisocyanate, must represent from 2 to 10% by weight; the addition of a polyisocyanate allows to regulate the viscosity of the pre-polymer before extension, and of the dispersion itself.

Although it is not mandatory, it is preferable to perform the dispersion of step b) in the presence of a surfactant, such as an ethoxylated fatty alcohol, and to use an amount of alkaline metal hydroxide enough to neutralize at least 80% of the carboxylic groups of the pre-polymer.

The alkaline metal hydroxide utilizable for the realization of the invention are lithium hydroxide, sodium hydroxide and potassium hydroxide. The best dispersions, when thermal stability and particle size distribution are considered, are obtained with sodium hydroxide and with lithium hydroxide, the latter being more preferred.

The polyamine utilizable in step c) of the procedure is an amine bearing at least two amino groups which are reactive towards the -NCO groups of the pre-polymer, that is, primary or secondary amino groups.

In step c) it is possible to use a mixture of polyamine.

Examples of utilizable polyamines are hydrazine, ethylenediamine, piperazine, 1,5-pentanediamine, 1,6-dihexanediamine, isophoronediamine, diethylenetriamine.

The temperature and duration of step c) and the amount of polyamine are determined to exhaust the free -NCO groups which are present in the pre-polymer.

According to a preferred embodiment of the invention, the polyamine is hydrated hydrazine or 1,5-pentanediamine.

The aqueous dispersions of anionic polyurethanes obtained from the procedure of the invention are stable, that is they do not generate visible sediments when maintained in closed vessel at ambient temperature for 180 days, at 50 °C for 30 days and at 65°C for 15 days; they are homogeneous.

Beside, they are completely free from volatile amines.

In the present text, with the expression "volatile amines" we mean tertiary amines and correspondent ammonium salts, that during the polyurethane film formation, which occurs at temperatures varying from ambient temperature to 90°C until an anhydrous film is obtained, evaporate at least for 90% of their amount.

The aqueous dispersions of anionic polyurethanes obtained from the procedure of the invention have Brookfield viscosity comprised between 20 and 1,000 mPa∗s, preferably between 20 and 500 mPa∗s; they are colourless or whitish, being transparent or having a milky aspect.

The films obtained by drying the dispersions of the invention have mechanical properties which are comparable to those of films from dispersions where volatile amines have been used as neutralizing agents.

The dispersions of the invention in which lithium hydroxide or sodium hydroxide have been used have particle size distribution and dimensions which are similar to those of analogue dispersions neutralized with triethylamine or dimethylethanolamine.

Furthermore, the dispersions from lithium hydroxide provide films with blistering characteristics in water which similar to those obtained from a volatile amine.

As already remarked, the procedure of the invention, when completed by the anionic polyurethane cross-linking step d) performed with a water dispersible polyisocyanate, provides films suitable for use in various fields, and particularly in the leather and paper fields.

The film obtained after cross-linking, as a matter of fact, have very good hydrolytic and mechanical resistance, good adhesion on paper, leather and skins and have no smell.

The water dispersible polyisocyanates which are utilizable as cross-linkers in step d) of the procedure of the invention are polyisocyanate having isocyanate functionality higher or equal to 3 and whose water dispersibility is due to polyoxyethylene side chains or ionic groups; optionally, the water dispersible polyisocyanates are used in step d) in diluted form, in organic solvents which are soluble in water, by way of example in N-methylpyrrolidone (NMP), N-ethylpyrrolidone (NEP), glycol ethers, such as dipropyleneglycol dimethyl ether (DMM), aliphatic esters, such as dipropyleneglycol diacetate, cyclic or linear aliphatic carbonate, among which we cite propylene carbonate.

The amount of crosslinker added may range from 1 to 10% by weight on the dispersion solid content.

Preferably, water dispersible polyisocyanates which cross-link at ambient temperature in 30 to 360 minutes from their addition the aqueous dispersion of the invention are used.

Step e) according to the invention shall therefore take place within 30-360 minutes from the crosslinker addition, depending on the reactivity of the crosslinker towards the polyurethane.

### EXAMPLES

In the here below examples the following compounds are used:
Polyol 1 = polycaprolactone diol, having molecular weight 830 g/mol;
Polyol 2 = polypropylene ether glycol, having molecular weight 4,000 g/mol;
Polyol 3 = polypropylene ether glycol, having molecular weight 2,000 g/mol;
Polyol 4 = polytetramethylene ether glycol, having molecular weight 1,000 g/mol;
Polyol 5 = 2,2-dimethylolpropionic acid;
Surfactant 1 = 8 moles ethoxylated C₁₀-C₁₆ linear alcohol;
Polyisocyanate 1 = 4,4'-methylene-bis-(4-cyclohexyl isocyanate).
Polyisocyanate 2 = isophorone diisocyanate;

### Example I (comparative example)

Preparation of an aqueous polyurethane dispersion containing triethylamine.

A reaction vessel, equipped with internal thermometer, stirrer and cooler, was filled, under nitrogen atmosphere and at room temperature, with 223.7 g (538.98 meq) of Polyol 1 (fed at 40°C), 47.2 g (704.203 meq) of Polyol 5 and 105.0 g of N-ethylpyrrolidone. The mixture was heated to 40° C and stirred for 30 minutes. 325.7 g (2486.366 meq) of Polyisocyanate 1 were added under stirring to the homogeneous mixture which was then maintained at 60°C for 30 minutes. The reaction temperature was brought to 95° C and maintained for approximately 1 hours, until the titrimetric determination of the free -NCO groups still present gave a calculated value of 7.45% by weight (value determined in this example as well as in the other examples according to the standard method ASTM D2572).

The pre-polymer (Pre-polymer A) was cooled to 70°C and then 32.0 g (316.890 mmol) of triethylamine were added into it (triethylamine equivalent on COO⁻ equivalent = 90%); after 10 minutes and at 65°C, 600 g of the neutralized pre-polymer were dispersed in 10 minutes under vigorous stirring into 1000.3 g of water cooled at 18°C and containing 10.9 g of Surfactant 1. 106.0 g of a 24.36% aqueous solution of hydrazine hydrate were added dropwise in 15'. During the extension step a maximum temperature of 36°C was reached. After 30 minutes stirring, the -NCO peak in the IR spectrum at 2240 cm⁻¹ had disappeared.

The obtained dispersion was adjusted with distilled water to a solid content of 30% and it has a stable, finely divided and transparent aspect.

### Example II - IV.

Preparation of aqueous polyurethane dispersions free from volatile amines from Pre-polymer A (synthesized as described in Example I) and using alkaline metal hydroxides.

### Example II

600 g of Pre-polymer A, cooled to 65°C, are dispersed in 14 minutes under vigorous stirring into 1088.8 g of demineralised water cooled at 18°C and containing 11.67 g of Surfactant 1 and 15.2 g of potassium hydroxide (hydroxide equivalents on COO⁻ equivalents = 90%).

110.6 g of a 24.36% aqueous solution of hydrazine hydrate are added in 14' and a maximum temperature of 32°C is reached during the extension step. After 30 minutes stirring, the -NCO peak in the IR spectrum at 2240 cm⁻¹ is disappeared.

The obtained dispersion was adjusted with distilled water to a solid content of 30% and it has a stable, finely divided and milky aspect.

### Example III

600 g of Pre-polymer A, cooled to 65°C, are dispersed in 14 minutes under vigorous stirring into 1080.7 g of demineralised water cooled at 18°C and containing 11.6 g of Surfactant 1 and 10.8 g of sodium hydroxide (hydroxide equivalents on COO⁻ equivalents = 90%).

110.6 g of a 24.36% aqueous solution of hydrazine hydrate are added in 14' and a maximum temperature of 31°C is reached during the extension step. After 30 minutes stirring, the -NCO peak in the IR spectrum at 2240 cm⁻¹ is disappeared.

The obtained dispersion was adjusted with distilled water to a solid content of 30% and it has a stable, finely divided and transparent aspect.

### Example IV

600 g of Pre-polymer A, cooled to 65°C, are dispersed in 14 minutes under vigorous stirring into 1067.5 g of demineralised water cooled at 18°C and containing 11.5 g of Surfactant 1 and 11.4 g of lithium hydroxide (hydroxide equivalents on COO⁻ equivalents = 90%).

110.6 g of a 24.36% aqueous solution of hydrazine hydrate are added in 14' and a maximum temperature of 32°C is reached during the extension step. After 30 minutes stirring, the -NCO peak in the IR spectrum at 2240 cm⁻¹ is disappeared.

The obtained dispersion was adjusted with distilled water to a solid content of 30% and it has a stable, finely divided and transparent aspect.

### Example V

Preparation of an aqueous anionic polyurethane dispersion using lithium hydroxide as the neutralizing agent of a pre-polymer obtained from Polyisocyanate 2 (Pre-polymer B).

A reaction vessel, equipped with internal thermometer, stirrer and cooler, was filled, under nitrogen atmosphere and at room temperature, with 245.2 g (590.829 meq) of Polyol 1 (fed at 40°C), 51.2 g (763.755 meq) of Polyol 5 and 100.0 g of N-ethylpyrrolidone. The mixture was heated to 40° C and stirred for 30 minutes. 271.0 g (2438.255 meq) of Polyisocyanate 2 were added under stirring to the homogeneous mixture which was then heated to 60°C for 30 minutes. The reaction temperature was brought to 100° C and maintained for 1 hour, until the titrimetric determination of the free -NCO groups still present gave a calculated value of 6.85% by weight.

The pre-polymer (Pre-polymer B) was cooled to 65°C.

500 g of Pre-polymer B, cooled to 65°C, are dispersed in 14 minutes under vigorous stirring into 893.2 g of demineralised water cooled at 18°C and containing 9.6 g of Surfactant 1 and 10.8 g of lithium hydroxide (hydroxide equivalents on COO⁻ equivalents = 90%).

84.7 g of a 24.36% aqueous solution of hydrazine hydrate are added in 14' and a maximum temperature of 33°C is reached during the extension step. After 30 minutes stirring, the -NCO peak in the IR spectrum at 2240 cm⁻¹ is disappeared.

The obtained dispersion was adjusted with distilled water to a solid content of 30% and it has a stable, finely divided and transparent aspect.

### Example VI (comparative example)

A reaction vessel, equipped with internal thermometer, stirrer and cooler, was filled, under nitrogen atmosphere and at room temperature, with 317.6 g (635.718 meq) of Polyol 4 (fed at 40°C), 42.7 g (635.7 meq) of Polyol 5, 0.212 g of 75% aqueous phosphoric acid and 100.0 g of N-methylpyrrolidone. The mixture was heated to 40° C and stirred for 30 minutes. 333 g (2542.870 meq) of Polyisocyanate 1 were added under stirring to the homogeneous mixture which was then heated to 60°C for 30 minutes. The reaction temperature was brought to 95° C and maintained for 1 hour, until the titrimetric determination of the free -NCO groups still present gave a calculated value of 6.73% by weight.

The obtained pre-polymer (Pre-polymer C) was cooled to 70°C and
28.9 g (286.070 mmol) of triethylamine are added into it under stirring (triethylamine equivalent on COO⁻ equivalent = 90%); after keeping the temperature at 65°C for 10 minutes, 650 g of Pre-polymer C are dispersed in 10 minutes under vigorous stirring into 820.5 g of demineralised water cooled at 18°C.

104.7 g of a 24.36% aqueous solution of hydrazine hydrate are added dropwise in 10' and a maximum temperature of 35°C is reached during the extension step. After 30 minutes stirring, the -NCO peak in the IR spectrum at 2240 cm⁻¹ is disappeared and 4.74 g of BYK® 346 (52% polyether modified dimethyl polysiloxane from Byk Chemie) are added to improve the substrate wettability.

The obtained dispersion was adjusted with distilled water to a solid content of 36% and it has a stable, finely divided and transparent aspect.

### Example VII-IX

Preparation of aqueous anionic polyurethane dispersions from Pre-polymer C (synthesized as described in Example VI) and using alkaline metal hydroxides.

### Example VII

650 g of the Pre-polymer C, cooled to 67°C, are dispersed in 10 minutes under vigorous stirring into 883.5 g of demineralised water cooled at 18°C and containing 13.1 g of potassium hydroxide (hydroxide equivalents on COO⁻ equivalents = 90%).

108.4 g of a 24.36% aqueous solution of hydrazine hydrate are added in 14' and a maximum temperature of 29°C is reached during the extension step. After 30 minutes stirring, the -NCO peak in the IR spectrum at 2240 cm⁻¹ is disappeared and 4.98 g of BYK® 346 are added.

The obtained dispersion was adjusted with distilled water to a solid content of 36% and it has a stable, finely divided and milky aspect.

### Example VIII

650 g of Pre-polymer C, cooled to 67°C, are dispersed in 10 minutes under vigorous stirring into 878.0 g of demineralised water cooled at 18°C and containing 9.3 g of sodium hydroxide (hydroxide equivalents on COO⁻ equivalents = 90%).

108.4 g of a 24.36% aqueous solution of hydrazine hydrate are added in 14' and a maximum temperature of 30°C is reached during the extension step. After 30 minutes stirring, the -NCO peak in the IR spectrum at 2240 cm⁻¹ is disappeared and 4.980 g of BYK® 346 are added.

The obtained dispersion was adjusted with distilled water to a solid content of 36% and it has a stable, finely divided and transparent aspect.

### Example IX

650 g of Pre-polymer C, cooled to 67°C, are dispersed in 10 minutes under vigorous stirring into 868.3 g of demineralised water cooled at 18°C and containing 9.8 g of lithium hydroxide (hydroxide equivalents on COO⁻ equivalents = 90%).

108.4 g of a 24.36% aqueous solution of hydrazine hydrate are added in 14' and a maximum temperature of 30°C is reached during the extension step. After 30 minutes stirring, the -NCO peak in the IR spectrum at 2240 cm⁻¹ is disappeared and 4.980 g of BYK® 346 are added.

The obtained dispersion was adjusted with distilled water to a solid content of 36% and it has a stable, finely divided and transparent aspect.

### Example X (comparative example)

A reaction vessel, equipped with internal thermometer, stirrer and cooler, was filled, under nitrogen atmosphere and at room temperature, with 442.6 g (442.604 meq) of Polyol 3, 30.9 g (461.505 meq) of Polyol 5 and 50.0 g of N-methylpyrrolidone. The mixture was heated to 40° C and stirred for 30 minutes. 213.2 g (1627.397 meq) of Polyisocyanate 1 were added under stirring to the homogeneous mixture which was then heated to 60°C for 30 minutes. The reaction temperature was brought to 100° C and maintained for 2 hours, until the titrimetric determination of the free -NCO groups still present gave a calculated value of 4.12% by weight.

650 g of the obtained pre-polymer (Pre-polymer D), cooled to 65°C, are dispersed under vigorous stirring in 10 minutes in 951.6 g of water containing 15.9 g of N,N-dimethylethanol amine (amine equivalent on COO⁻ equivalent = 95%) at 18°C;

59.6 g of a 24.36% aqueous solution of hydrazine hydrate are added dropwise in 10' and a maximum temperature of 35°C is reached during the extension step. After 30 minutes stirring, the -NCO peak in the IR spectrum at 2240 cm⁻¹ is disappeared and 1.630 g of BYK® 346 are added.

The obtained dispersion was adjusted with distilled water to a solid content of 35% and it has a stable, finely divided and milky aspect.

### Example XI-XIII

Preparation of aqueous anionic polyurethane dispersions from Pre-polymer D (synthesized as described in Example X) and using alkaline metal hydroxides.

### Example XI

650 g of Pre-polymer D, cooled to 65°C, are dispersed in 10 minutes under vigorous stirring into 1057.1 g of demineralised water cooled at 18°C and containing 10.84 g of potassium hydroxide (hydroxide equivalents on COO⁻ equivalents = 95%).

65.2 g of a 24.36% aqueous solution of hydrazine hydrate are added in 10' and a maximum temperature of 34°C is reached during the extension step. After 30 minutes stirring, the -NCO peak in the IR spectrum at 2240 cm⁻¹ is disappeared and 1.780 g of BYK® 346 are added.

The obtained dispersion was adjusted with distilled water to a solid content of 35% and it has a stable, finely divided and milky aspect.

### Example XII

650 g of Pre-polymer D, cooled to 65°C, are dispersed in 10 minutes under vigorous stirring into 1051.9 g of demineralised water cooled at 18°C and containing 7.73 g of sodium hydroxide (hydroxide equivalents on COO⁻ equivalents = 95%).

65.2 g of a 24.36% aqueous solution of hydrazine hydrate are added in 10' and a maximum temperature of 34°C is reached during the extension step. After 30 minutes stirring, the -NCO peak in the IR spectrum at 2240 cm⁻¹ is disappeared and 1.780 g of BYK® 346 are added.

The obtained dispersion was adjusted with distilled water to a solid content of 35% and it has a stable, finely divided and transparent aspect.

### Example XIII

650 g of Pre-polymer D, cooled to 65°C, are dispersed in 10 minutes under vigorous stirring into 1043.3 g of demineralised water cooled at 18°C and containing 8.12 g of lithium hydroxide (hydroxide equivalents on COO⁻ equivalents = 95%).

65.2 g of a 24.36% aqueous solution of hydrazine hydrate are added in 10' and a maximum temperature of 35°C is reached during the extension step. After 30 minutes stirring, the -NCO peak in the IR spectrum at 2240 cm⁻¹ is disappeared and 1.780 g of BYK® 346 are added.

The obtained dispersion was adjusted with distilled water to a solid content of 35% and it has a stable, finely divided and transparent aspect.

### Example XIV

Preparation of an aqueous polyurethane dispersion obtained from a pre-polymer to which a free polyisocyante has been added, and neutralized with lithium hydroxide.

A reaction vessel, equipped with internal thermometer, stirrer and cooler, was filled, under nitrogen atmosphere and at room temperature, with 264.8 g (264.807 meq) of Polyol 3, 24.0 g (357.496 meq) of Polyol 5 and 250.0 g of N-ethylpyrrolidone. The mixture was heated to 40° C and stirred for 30 minutes. 146.8 g (1120.130 meq) of Polyisocyanate 1 were added under stirring to the homogeneous mixture which was then heated to 60°C for 30 minutes. The reaction temperature was brought to 100° C and maintained for approximately 1 hour, until the titrimetric determination of the free -NCO groups still present gave a calculated value of 4.54% by weight.

The pre-polymer was cooled to 80°C and 13.8 g (124.464 meq) of Polyisocyanate 2 are added under stirring. The determination of the free -NCO groups still present gave a calculated value of about 5.51% by weight.

400 g of the obtained neutralized pre-polymer (Pre-polymer E), cooled to 70°C were dispersed in 10 minutes into 594.0 g of demineralised water cooled at 18°C and containing 5.88 g of lithium hydroxide (hydroxide equivalent on COO⁻ equivalent = 93%).

51.9 g of a 24.36% aqueous solution of hydrazine hydrate were added in 10' and a maximun temperature of 28°C was reached during the extension step.

After 30 minutes stirring, the NCO- peak in the IR spectrum at 2240 cm⁻¹ is disappeared.

The obtained dispersion was adjusted with distilled water to a solid content of 37% and it has a stable, finely divided and transparent aspect.

### Example XV (comparative example)

Preparation of an aqueous polyurethane dispersion containing triethylamine.

A reaction vessel, equipped with internal thermometer, stirrer and cooler, was filled, under nitrogen atmosphere and at room temperature, with 133.1g (133.030 meq) of Polyol 3, 266.2 g (133.090 meq) of Polyol 2, 35.7 g (563.355 meq) of Polyol 5 and 72.0 g of N-methylpyrrolidone.

The mixture was heated to 40° C and stirred for 30 minutes and 209.2 g (1597.069 meq) of Polyisocyanate 1 were added under stirring to the homogeneous mixture which was then heated to 60°C for 30 minutes. The reaction temperature was brought to 95° C and maintained for approximately two hours, until the titrimetric determination of the free -NCO groups still present gave a value of 4.69% by weight.

To the obtained pre-polymer (Pre-polymer F), cooled to 75°C, 24.2 g (239.555 mmol) of triethylamine were added (triethylamine equivalent on COO⁻ equivalent = 90%); after 10 minutes and at 70°C, 400 g of the pre-polymer were dispersed under vigorous stirring in 10 minutes into 522.5 g of water cooled at 18°C.

44.9 g of a 24.36% aqueous solution of hydrazine hydrate were added in 15' and a maximum temperature of 33°C was reached during the extension step. After 30 minutes stirring, the -NCO peak in the IR spectrum at 2240 cm-1 is disappeared.

The obtained dispersion has a solid amount of 37% and has a stable, finely divided and transparent aspect.

### Example XVI (comparative)

Preparation of an aqueous dispersion of a polyurethane containing sodium hydroxide, according to the process described in US 4,701,480.

To 400 g of the dispersion obtained in Example XV, having 37% solid content, 1 M sodium hydroxide was added to 100% neutralize the COO⁻ groups (53.2 g of 1 M solution).

It is not possible to use more concentrated solutions, because they give rise to the formation of deposits.

The sample obtained (solid content 32.6%) was heated to 70°C under reduced pressure (20 mmHg) for 4 hours to remove the volatile amine; during distillation abundant foam and films on the reactor wall are generated.

After cooling the solid content was determined and adjusted with distilled water to 30%.

Films remain unaltered.

Triethylamine traces persist in the dispersion (0.16% by weight, determined by Gas Chromatography, CPSIL8CB column).

### Application tests.

The aspect, the Brookfield viscosity (spindle 2, 6 rpm, 25°C) and the particle size distribution (measured with Coulter N4 Plus capability range 3nm-3 microns) of the dispersions obtained in Ex. I - XVI are reported in Table 1.

These data show that the dispersions obtained with sodium and lithium hydroxide are transparent and have particle size distributions fully comparable with those of the analogue dispersions neutralized with triethylamine.

**Table 1**

| EXAMPLE | VISCOSITY (mPa∗s) | Mean Diameter (nm) | Standard Deviation (nm) | Aspect |
|---|---|---|---|---|
| I* | 33.3 | 47.7 | 28.1 | Very transparent |
| II | 26.7 | 139.5 | 330.2 | Milky |
| III | 26.7 | 52.2 | 51.1 | Transparent |
| IV | 26.7 | 34.3 | 16.9 | Very transparent |
| V | 80.0 | 57.9 | 27.1 | Very transparent |
| VI* | 140.0 | 50.4 | 35.6 | Very transparent |
| VII | 40.0 | 66.7 | 37.5 | Milky |
| VIII | 40.0 | 68.7 | 38.9 | Transparent |
| IX | 33.3 | 65.2 | 27.1 | Very transparent |
| X* | 320.0 | 111.8 | 152.6 | Milky |
| XI | 393.0 | 219.3 | 146.9 | Milky |
| XII | 300.0 | 190.0 | 73.4 | Transparent |
| XIII | 280.0 | 212.2 | 92.6 | Very transparent |
| XIV | 140.0 | 145.7 | 26.0 | Transparent |
| XV* | 40.0 | 50.6 | 23.2 | Very transparent |
| XVI* | 33.3 | 52.3 | 23.9 | Very transparent |

| | | | | |
|---|---|---|---|---|
| *comparative example | | | | |

From the dispersions of Example I (comparative) and from Examples II, III and IV, 500 microns thick films have been prepared, to measure the blistering effects following 24 hours immersion in distilled water.

Results are shown in Table 2, using the following legend: 0 = no visible blistering; 1 = slight blistering; 2 = strong blistering.

**Table 2**

| Example | Blistering |
|---|---|
| I* | 1 |
| II | 2 |
| III | 2 |
| IV | 1 |

| | |
|---|---|
| *comparative example | |

To evaluate the resistance toward water and ethanol of films obtained from the dispersions of the invention, 1 micron thick films were prepared from the dispersions of Examples I, III, IV, VII, VIII, IX, XI, XII, XIII and XIV, to which, under stirring, 5% of Fissativo 05, a water dispersible polyisocyanate crosslinker commercialized by Lamberti SpA (76% solid content) and 3% of butyldiglycol ether co-solvent.

The chemical resistance of the films, reported in Table 3, was determined after drying (24 hours at 25°C followed by 24 hours at 60°C), by measuring the length of time taken by film each sample to break in water and in 52% ethanol in water.

**Table 3**

| EXAMPLE | WATER RESISTANCE (minutes) | ETHANOL RESISTANCE (minutes) |
|---|---|---|
| II | 120 | 30 |
| III | 120 | 30 |
| IV | 135 | 30 |
| VII | 240 | 30 |
| VIII | 240 | 30 |
| IX | 240 | 30 |
| XI | 150 | 20 |
| XII | 140 | 22 |
| XIII | 150 | 26 |
| XIV | 150 | 26 |

Moreover, the dispersions of the Examples I and IV, and of the Examples VI and IX were compared by using them in the leather finishing composition described in Table 4 and by measuring the wet rub resistance of a finished leather substrate. The wet rub resistance values were determined with a VESLICRUB FASTENSS TESTER VESLIC (according to I.U.F./450 DIN 53339 ISO 11640) and reported in Table 5.

**Table 4**

| | Ex. XVII* | Ex. XVIII | Ex. XIX* | Ex. XX |
|---|---|---|---|---|
| Dispersion Example I | 438 | - | - | - |
| Dispersion Example IV | - | 438 | - | - |
| Dispersion Example VI | - | - | 365 | - |
| Dispersion Example IX | - | - | - | 365 |
| Water | 518.5 | 518.5 | 591.5 | 591.5 |
| Anti-scratch additive | 3 | 3 | 3 | 3 |
| Levelling additive | 20 | 20 | 20 | 20 |
| Antifoam | 0.5 | 0.5 | 0.5 | 0.5 |
| Polyurethane thickener | 20 | 20 | 20 | 20 |
| (TOTAL) | (1000) | (1000) | (1000) | (1000) |

| | | | | |
|---|---|---|---|---|
| *comparative example | | | | |

**Table 5**

| Example | Wet rub test |
|---|---|
| XVII* | 500 |
| XVIII | 500 |
| XIX* | 250 |
| XX | 300 |

| | |
|---|---|
| * comparative example | |

## Claims

1. Method to prepare polyurethane films free from amines comprising the following steps: a) preparing a pre-polymer containing from 2 to 10% by weight of -NCO groups and from 10 to 100 meq of carboxylic groups by reaction of: i) at least one polyol containing a -COOH group, II) non ionic polyols selected among polyalkylene ether glycols having molecular weight from 400 to 4,000 and polyester polyols; iii) at least one aliphatic or cycloallphatic polyisocyanate; b) dispersing the pre-polymer in an aqueous solution containing an alkaline metal hydroxide, at temperature between 5° and 30°C, the amount of alkaline metal hydroxide being enough to neutralize at least 60% of the carboxylic groups of the pre-polymer; c) extending the pre-polymer by addition of a polyamine, maintaining the temperature between 5 and 40°C, and obtaining a 20 to 50% by weight aqueous dispersion of polyurethane; d) adding to the aqueous dispersion a cross-linking agent; e) spreading the aqueous dispersion on a solid support, such as leather, glass, paper, plastic, textile or metal, and drying.

2. Method according to claim 1, wherein the polyol i) is a 2,2-dimethylolalkanoic acid and the polylsocyanate iii) is 1,6-hexamethylenediisocyanate, 4,4'-methylene-bis(4-cyclohexyl isocyanate), isophorone diisocyanate or mixture thereof; the alkaline metal hydroxide of step b) is selected from lithium hydroxide, sodium hydroxide and mixture thereof; the polyamine of step c) is selected among hydrazine, ethylenediamine, piperazine, 1,5-pentanediamine, 1,6-dihexanediamine, isophoronediamine, diethylenetriamine; the cross-linking agent of step d) Is a water dispersible polyisocyanate.

3. Method according to claim 2 wherein the polyol i) is 2,2-dihydroxymethyl propanoic acid; the non ionic polyols ii) are polycaprolactone diol, polypropylene glycol ether, polytetramethylene glycol ether, or mixture thereof; the polyisocyanate iii) is 4,4'-methylene-brs(4-cyclohexyl isocyanate); the alkaline metal hydroxide is lithium hydroxide or sodium hydroxide or mixture thereof; the polyamine of step c) is hydrated hydrazine, or 1,5-pentanediamine, or mixture thereof.

4. Method according to any of the claims from 1 to 3 wherein the alkaline metal hydroxide is lithium hydroxide.

## Patentansprüche

1. Verfahren zur Herstellung von aminfreien Polyorethan-Filmen umfassend die folgenden Schritte: a) Herstellen eines Prepolymers enthaltend zwischen 2 und 10 Gew.-% -NCO-Gruppen und zwischen 10 und 100 meq Carboxyl-Gruppen durch Reaktion von: i) wenigstens einem Polyol, welches eine COOH-Gruppe enthält; ii) nicht-ionischen Polyolen ausgewählt aus Polyalkylether-Glycolen mit einem Molekulargewicht zwischen 400 und 4000 und Polyester-Polyolen; iii) wenigstens einem aliphatischen oder cycloaliphatischen Polyisocyanat; b) dispergieren des Prepolymers in einer wässrigen Lösung enthaltend ein Alkalimetall-Hydroxid bei einer Temperatur zwischen 5°C und 30°C, wobei die Menge des Alkalimetall-Hydroxids ausreicht, um wenigstens 60% der Carboxyl-Gruppen des Prepolymers zu neutralisieren; c) Erweitern des Prepolymers durch Zugabe eines Polyamins, wobei die Temperatur zwischen 5°C und 40°C gehalten wird und wobei eine wässrige Dispersion mit 20 bis 50 Gew.-% Polyurethan erhalten wird; d) Hinzufügen eines Vernetzungsmittels zu der wässrigen Dispersion; e) Verteilen der wässrigen Suspension auf einem festen Träger, wie etwa Leder, Glas, Papier, Kunststoff, Textil, oder Metall und Trocknen.

2. Verfahren nach Anspruch 1, wobei das Polyol i) eine 2,2-Dimethylalkan-Säure ist und das Polyisocyanat iii) 1,6-Hexamethyldiisocyanat, 4,4'-Methyl-bis(4-cyclohexylisocyanat), Isophorondiisocyanat oder eine Mischung davon ist; wobei des Alkalimetall-Hydroxid aus Schritt b) ausgewählt ist aus Lithium-Hydroxid, Natrium-Hydroxid und einer Mischung davon; wobei das Polyamin aus Schritt c) ausgewählt ist aus Hydrazin, Ethylendiamin, Piperazin, 1,5-Pentandiamin, 1,6-Dihexandiamin, Isophorondiamin, Diethyltriamin; wobei das Vernetzungsmittel aus Schritt d) ein in Wasser dispergierbares Polyisocyanat ist.

3. Verfahren nach Anspruch 2, wobei das Polyol i) 2,2-Dihydroxymethylpropansäure ist; wobei die nicht-ionischen Polyole ii) Polycaprolactondiol, Polypropylenglycolether, Polytetramethylglycolether oder eine Mischung davon sind; wobei das Polyisocyanat iii) 4,4'-Methyl-bis(4-cyclohexylisocyanat) ist; wobei das Alkalimetall-Hydroxid Lithium-Hydroxid, Natrium-Hydroxid oder einer Mischung davon ist; wobei das Polyamin aus Schritt c) hydriertes Hydrazin, 1,5-Pentandiamin oder eine Mischung davon ist.

4. Verfahren nach einem der Ansprüche 1 bis 3, wobei das Alkalimetall-Hydroxid Lithium-Hydroxid ist.

## Revendications

1. Procédé pour préparer des films de polyuréthane exempts d'amines, comprenant les étapes suivantes : a) préparation d'un prépolymère contenant de 2 à 10 % en poids de groupes -NCO et de 10 à 100 méq de groupes carboxyliques, par réaction de (i) au moins un polyol contenant un groupe -COOH, ii) des polyols non-ioniques choisis parmi les éthers de polyalkylèneglycol ayant une masse moléculaire de 400 à 4 000 et les polyester-polyols ; iii) au moins un polyisocyanate aliphatique ou cycloaliphatique ; b) dispersion du prépolymère dans une solution aqueuse contenant un hydroxyde de métal alcalin, à une température comprise entre 5° et 30 °C, la quantité d'hydroxyde de métal alcalin étant suffisante pour neutraliser au moins 60 % des groupes carboxyliques du prépolymère ; c) allongement du prépolymère par addition d'une polyamine, maintien de la température entre 5 et 40 °C, et obtention d'une dispersion aqueuse à 20 à 50 % en poids de polyuréthane ; d) addition d'un agent de réticulation à la dispersion aqueuse ; e) étalement de la dispersion aqueuse sur un support solide, tel que du cuir, du verre, du papier, du plastique, du textile ou du métal, et séchage.

2. Procédé selon la revendication 1, dans lequel le polyol i) est un acide 2,2-diméthylolalcanoïque et le polyisocyanate iii) est le diisocyanate de 1,6-hexaméthylène, le bis(4-cyclohexylisocyanate) de 4,4'-méthylène, le diisocyanate d'isophorone ou un mélange de ceux-ci ; l'hydroxyde de métal alcalin de l'étape b) est choisi parmi l'hydroxyde de lithium, l'hydroxyde de sodium et leurs mélanges ; la polyamine de l'étape c) est choisie parmi l'hydrazine, l'éthylènediamine, la pipérazine, la 1,5-pentanediamine, la 1,6-dihexanediamine, l'isophoronediamine, la diéthylènetriamine ; l'agent de réticulation de l'étape d) est un polyisocyanate dispersible dans l'eau.

3. Procédé selon la revendication 2, dans lequel le polyol i) est l'acide 2,2-dihydroxyméthylpropanoïque ; les polyols non-ioniques ii) sont le polycaprolactonediol, l'éther de polypropylèneglycol, l'éther de polytétraméthylèneglycol, ou un mélange de ceux-ci ; le polyisocyanate iii) est le bis(4-cyclohexylisocyanate) de 4,4'-méthylène ; l'hydroxyde de métal alcalin est l'hydroxyde de lithium ou l'hydroxyde de sodium ou un mélange de ceux-ci ; la polyamine de l'étape c) est l'hydrazine hydratée, la 1,5-pentanediamine, ou un mélange de celles-ci.

4. Procédé selon l'une quelconque des revendications 1 à 3, dans lequel l'hydroxyde de métal alcalin est l'hydroxyde de lithium.
